# FASCICULE DE BREVET EUROPEEN

(11) **EP 3 652 069 B1**
(45) Date de publication et mention de la délivrance du brevet: **14.07.2021**
(21) Numéro de dépôt: 18756267.3
(22) Date de dépôt: 12.07.2018
(51) Int. Cl.: B64C 27/12, B64C 27/72, B64C 11/44, B64C 39/02

(54) **DISPOSITIF DE COMMANDE DIRECTE DE PALE PAR ACTIONNEUR ÉLECTROMÉCANIQUE**
VORRICHTUNG ZUR DIREKTEN BLATTKONTROLLE MIT ELEKTROMECHANISCHEM AKTUATOR
DEVICE FOR DIRECT CONTROL OF BLADE BY ELECTROMECHANICAL ACTUATOR

(30) Priorité: 13.07.2017 FR 1700752
(43) Date de publication de la demande: 20.05.2020
(73) Titulaire: Willinger, Yann Raymond Albert, 92600 Asnieres sur Seine (FR)
(72) Inventeur: Willinger, Yann Raymond Albert, 92600 Asnieres sur Seine (FR)
(86) Numéro de dépôt international: PCT/FR2018/000192
(87) Numéro de publication internationale: WO 2019/012191

(56) Documents cités:
- EP-A1- 2 821 344
- FR-A1- 2 851 932
- US-A- 4 648 345
- US-A- 5 282 719
- US-A1- 2014 061 369

## Description

La présente invention concerne un dispositif de commande de pale directe ainsi qu'un aéronef muni d'un tel système, et plus particulièrement mais non exclusivement un rotor principal de petit vecteur aérien, notamment de petit vecteur aérien à décollage verticale sans pilote et automatisé.

La commande de pas cyclique et de pas collectif des pales d'un rotor de type hélicoptère se fait dans l'état de la technique actuelle par l'intermédiaire d'un plateau cyclique et d'actionneurs permettant l'action de ce plateau cyclique.

Un ensemble de biellette et de pièces mécaniques est actionné de manière à avoir une incidence cyclique des pales pour générer un couple permettant l'orientation du vecteur.

Ce principe nécessite au moins deux actionneurs qui orientent la partie bloquée en rotation du plateau cyclique, qui par un ensemble de biellette va orienter les pales selon leurs positions angulaires suivant une fonction sinusoïdale.

La complexité de ces systèmes mécaniques, leurs poids limitent leurs applications pour des vecteurs aériens, surtout ceux de petite taille, notamment par la présence d'au moins deux actionneurs pour les plateaux cycliques.

Certains systèmes commandent directement les pales par des actionneurs couplés aux pales, l'alimentation en énergie et la commande de ces actionneurs en rotation avec le rotor sont problématiques, ils nécessitent soit des générateurs qui sont un poids additionnel soit des collecteurs électriques qui sont des contacts électriques. Les systèmes proposant une commande directe des pales par des systèmes électromécaniques, notamment des commandes de pas cyclique se font par une commutation complexe d'une pluralité d' électroaimant. Certains systèmes de commande directe des pales prévoient une ou plusieurs bobines pour la commande du pas cyclique des pales mais les systèmes proposés sont instables ou n'offre pas suffisamment d'interaction électromécanique pour assurer une commande directe de pale.

Le document WO2005/100154A1 (WAVE FRONT TECHNOLOGY PTY LTD) prévoit un control individuel des pales par un moteur pas à pas, l'alimentation des moteurs est effectuée par un alternateur ou de multiples alternateurs agencés concentriquement au rotor.

Le document US2015/0028597A1 (Sikorsky) prévoit un control individuel des pales avec un actionneur par pale dont l'alimentation nécessite au moins un collecteur électrique pour l'alimentation et la commande des actionneurs.

Le document EP2821344A1 (AIRBUS) prévoit un control individuel des pales qui interagissent avec des disques composés d'une pluralité d'électroaimants électriquement indépendants, ceux-ci pouvant agir comme moteur ou générateur, la commutation d'un disque par rapport à l'autre agit sur la rotation des pales permettant des commandes de pas collectif ou des commandes de pas cyclique.

le document WO02/096752A1 (Vogel HERIBERT) prévoit de modifier l'angle d'incidence des pales par l'intermédiaire de bobines, soit sur le rotor et en rotation avec celui-ci puis alimentées par contacts électriques, soit fixe au niveau de l'axe de transmission agissant sur l'incidence des pales par des renvois passant à l'intérieur de l'axe de transmission.

Le document FR2851932 (Jean Marie PIEDNOIR) prévoit la rotation d'un ensemble de deux pales opposées par l'intermédiaire de différents agencements de bobines, permettant des commandes de pas cyclique avec au moins une bobine.

Le document US4648345 divulgue une hélice avec une pluralité de pales s'étendant radialement à partir d'un moyeu qui est mis en rotation par un moteur autour d'un axe d'entraînement. Une pluralité d'électroaimants sont positionnés de manière annulaire à côté du moyeu de sorte que des aimants permanents connectés aux pieds des pales correspondantes puissent être attirés et / ou repoussés pour induire un mouvement de torsion dans les pales lorsque le moyeu tourne autour de son axe d'entraînement. Un circuit de commande reçoit des commandes d'entrée pour un dispositif de commande manuelle et amène des signaux électriques prédéterminés à être appliqués aux électroaimants pour faire varier simultanément le pas des pales.

L'une des problématiques des commandes directes de pales par un système électromécanique est de générer suffisamment de couple pour pouvoir commander et contrôler l'angle des pales, avec une amplitude suffisante, pour une inertie et un couple aéraulique donné des pales et du support pale. En particulier la commande directe de pas cyclique qui nécessite une oscillation des pales à une fréquence élevée de plusieurs dizaines voir centaines de hertz. L'oscillation est une variation d'un angle plus ou moins alpha de l'angle des pales autour d'un pas neutre, elle crée un couple dépendant de l'inertie et de la fréquence d'oscillation des pales autour de l'axe de rotation des pales. Un couple aéraulique est également présent et peut varier en fonction de l'incidence et du profil des pales. Il est donc nécessaire d'avoir une inertie faible de la partie électromécanique en mouvement et un couple du système électromécanique élevé pour pouvoir contrôler cette oscillation en fréquence, en amplitude et en phase. La mesure de l'angle des pales est complexe dans un tel système et donc son asservissement, notamment l'asservissement de l'angle neutre des pales. Un système permettant un angle neutre et stable sans actions électromécaniques est idéal et moins consommateur d'énergie.

Le dispositif selon l'invention comprend un rotor par commande directe de pale permettant des commandes de pas cycliques et des commandes de pas collectif par le biais d'un actionneur centrale, un stator partiellement sphérique positionné à la coïncidence des liaisons pivots du mécanisme, permettant un entre fer faible et constant entre aimants et stator, générant un couple important et une incidence neutre des pales au repos, permettant une oscillation cyclique efficace des pales, associant simplicité, légèreté et robustesse.
Le dispositif rotatif par commande directe de pales, particulièrement pour un aéronef à décollage vertical, ce dispositif rotatif comprenant :
- un rotor en rotation autour d'un axe rotor
- au moins un support pale en liaison essentiellement pivot avec le rotor en rotation autour d'un axe pale, un plan pale est définit passant par le dit axe rotor et passant par le dit axe pale .
- au moins une pale attachée au support pale
- un stator
Le dit stator est partiellement sphérique, il est composé d'au moins une bobine, le centre du dit stator est l'intersection de l'axe pale et de l'axe rotor. Le support pale est composé d'au moins un aimant dont la face interne est courbe, décalé de l'axe pale perpendiculairement au plan pale, radialement proche du stator pour permettre une interaction électromagnétique afin de contrôler l'angle des pales autour de l'axe pale.
Un plan rotor est définie perpendiculaire à l'axe rotor et passant par l'axe pale.
Dans une réalisation particulière les aimants sont radialement proche du stator dans le plan rotor.
Le dit aimant peut être une pièce ferromagnétique saturée magnétiquement par au moins un aimant permanent.
Le dit aimant peut aussi être un ensemble d'aimants permanents non courbe mais formant une courbe par leur assemblage.
La face externe du dit aimant est radialement proche, typiquement dans le plan rotor, d'une bague magnétique solidaire du rotor, pour permettre un maintient magnétique en position angulaire neutre de la rotation des pales. Agissant comme un ressort, le système peut être assimilé à un oscillateur mécanique en commande cyclique, l'énergie apportée pour contrôler cette oscillation est très faible autours de l'oscillation naturelle du système. La bague magnétique ferme le flux magnétique des dit aimants évitant ainsi les perturbations magnétiques, particulièrement problématique pour des aéronefs disposant de magnétomètre.

En commande cyclique le dit stator va contrôler cette oscillation en fréquence, phase et amplitude. Le contrôle de la fréquence est synchrone avec la vitesse de rotation du rotor, le contrôle de la phase contrôle la direction du couple en tangage/roulis, le contrôle de l'amplitude contrôle l'intensité du couple généré.

La bague magnétique peut être ferromagnétique, elle peut être composée d'aimants permanents, dit aimant rotor, permettant le maintient magnétique au neutre de la rotation des pales. La fonction peux être non linéaire selon la forme de la bague, elle est sans contact et sans phénomènes de fatigue et diminue l'inertie du dit support pales autours du dit axe pale étant donné que la bague magnétique est solidaire du rotor. Ce maintient au neutre assure la stabilité du système et améliore le rendement en commande de pas cyclique, la commande des pales peut grâce à cela être en boucle ouverte, l'ensemble pales et support pales aura donc une fréquence propre d'oscillation dépendant de leur inertie et du couple généré par l'attraction entre les aimants et la bague magnétique.

Le dit stator est un stator avec corps ferromagnétique, laminé ou non, il permet selon son excitation de commander l'angle des pales. Le centre du stator est coïncident avec l'intersection du dit axe pale et du dit axe rotor, cela permet la rotation de l'aimant autour de l'axe rotor mais également autour de l'axe pale, l'aimant aura donc une coordonnée sphérique de rayon fixe par rapport au stator. La sphéricité du stator et la courbure de l'aimant permettent d'assurer une distance minimale, typiquement de 0.1 à 1mm, entre l'aimant et le stator quelque soit la position de l'aimant, permettant une interaction efficace et de grande amplitude autour du dit axe pale. Le dit stator peut être rainuré parallèlement au dit plan rotor et contenir une bobine, cela simplifie le bobinage et la fabrication du dit stator. Le stator peut être composé d'une ou plusieurs bobines coaxiales avec le dit axe rotor, le stator est dans ce cas bipolaire. Le flux magnétique peut aussi être contrôlé par plusieurs bobines distribuées sur la périphérie du stator, le stator peut être alors multipolaire, cela permet une distribution magnétique différente pour chaque bobine, cela permet d'avoir des commandes simultanées de pas cyclique et de pas collectif.

Les aimants peuvent êtres agencés de différentes manières, cela peut être un dipôle dont les pôles sont sur la face interne et externe d'un segment d'un anneau, ou un anneau bipolaire dont le flux est orienté radialement dans le cas d'un seul support pale.

Dans le cas d'un stator avec une bobine coaxiale, qui est donc bipolaire, si toutes les pales en liaison pivot avec le rotor ont des aimants de polarités similaires, elles auront toutes la même incidence, permettant des commandes de pas collectif agissant alors comme une hélice à pas variable. Si les pales ont des aimants de polarités opposés, elles auront une variation de l'incidence opposée en fonction de l'excitation du stator, générant ainsi en fonction de leurs positions autour du dit axe rotor des commandes de pas cyclique. Dans le cas d'une pale unique, on commande le pas cyclique mais également le pas collectif, qui combine dans ce cas les deux fonctionnements.

Le dispositif diminue drastiquement le nombre de pièces nécessaires à une commande de pas des pales, cinématiquement simple, la liaison pivot entre les pales et le rotor principal peut être assurée par des roulements, il y a donc ni frottement, ni biellette, ni plateau cyclique.

L'excitation du stator va entraîner la rotation alpha des pales dans un sens ou dans l'autre selon le sens du courant, l'intensité du courant va faire varier l'amplitude de la rotation alpha. Ce dispositif permet une commande simple et très rapide des pales, de manière sinusoïdale mais aussi toutes autres fonctions complexes permettant des commandes différentes à l'état de la technique actuelle.

L'oscillation autour d'une position neutre de l'angle des pales permet un asservissement simplifié de l'angle des pales, en fréquence, amplitude et phase, la seule donnée de la vitesse angulaire des pales est suffisante à cet asservissement. Une commande asservit par la mesure de la Force Electro Motrice (FEM) permet un asservissement de la vitesse angulaire des pales. Il est possible de mesurer la FEM sur la ou les bobines permettant l'excitation du stator, néanmoins une ou des bobines dédiées à la mesure permettent une utilisation plus performante du dispositif.

Le stator peut être composé d'au moins une bobine de mesure coaxiale, permettant une mesure optimale de la FEM afin de déterminer l'angle des pales. Le stator peut être composé d'au moins une bobine de mesure situé sur la partie sphérique du stator afin de déterminer par la Force Electromotrice ou par induction la position des pales. Le fait que la ou les bobines permettant la mesure de la position des pales ou de l'angle des pales soit situées sur la partie sphérique diminue les perturbations magnétiques lié à l'excitation électromécanique du stator. Idéalement ces bobines de mesure sont des bobines de surface, en fil émaillé ou en circuit imprimé flexible. Le système peut aussi fonctionner en boucle ouverte.

En commande de pas cyclique une alimentation constante du dit stator pourra annuler les phénomènes de différence de pas statique entre deux pales communément appelé "tracking", pour une pale unique cela permet de commander le pas collectif.

La liaison pivot entre les pales et le rotor et la "raideur magnétique" de la rotation des pales assuré les aimants permet dans le cas d'une pale au moment aéraulique adéquat d'avoir une réaction au flux d'air transversal similaire à une liaison communément appelé liaison "K" qui permet de diminuer l'incidence de la pale avançant par rapport à la pale reculant dans un flux d'air transversal, cette caractéristique aide à la stabilité du dispositif et à sa robustesse en cas de vent transversal important.

Le dispositif selon l'invention permet de commander le pas cyclique, de commander le pas collectif, les prototypes réalisés montrent une grande réactivité, une faible consommation, une simplicité de fonctionnement, une grande compacité, un allègement du mécanisme et une bonne fiabilité.

Ce système est idéalement couple directement avec un moteur, offrant une solution compacte, légère et robuste pour l'orientation d'un vecteur aérien, notamment de petite taille sans pilote (RPA, drone, UAV). Le dispositif peut équiper des aéronefs, particulièrement des aéronefs à décollage verticale. Lorsque deux dispositifs équipent une voilure fixe, notamment lorsqu'ils sont agencés de manière coaxial et en contra rotation, il est possible de commander des aéronefs qui comportent une voilure fixe et ainsi se soustraire des contrôles de surfaces.

Les dessins annexés illustrent l'invention :
La figure 1 représente en coupe, le dispositif de l'invention dans l'axe des pales, un stator partiellement sphérique avec une bobine coaxiale, un seul support pale avec deux aimants solidaires de deux pales, avec un angle alpha neutre et avec la représentation d'un moteur couple au dispositif.
La figure 2 représente en coupe BB, le dispositif de l'invention avec un seul support pale avec deux aimants solidaire de deux pales.
La figure 3 représente en coupe BB, le dispositif de l'invention avec un angle alpha.
La figure 4 représente en coupe BB, le dispositif de l'invention avec un angle alpha inverse à la figure 3.
La figure 5 représente en coupe BB, un deuxième mode de réalisation, le dispositif de l'invention avec deux supports pales avec chacun un aimant de même polarité solidaire d'une pale, avec un angle alpha positif pour toutes les pales.

En référence à ces dessins, l'axe (9) est fixe, les roulements (10) permettent la rotation du rotor (8) qui entraîne en rotation autour de l'axe (9) le ou les supports pales (7) et les pales (3).

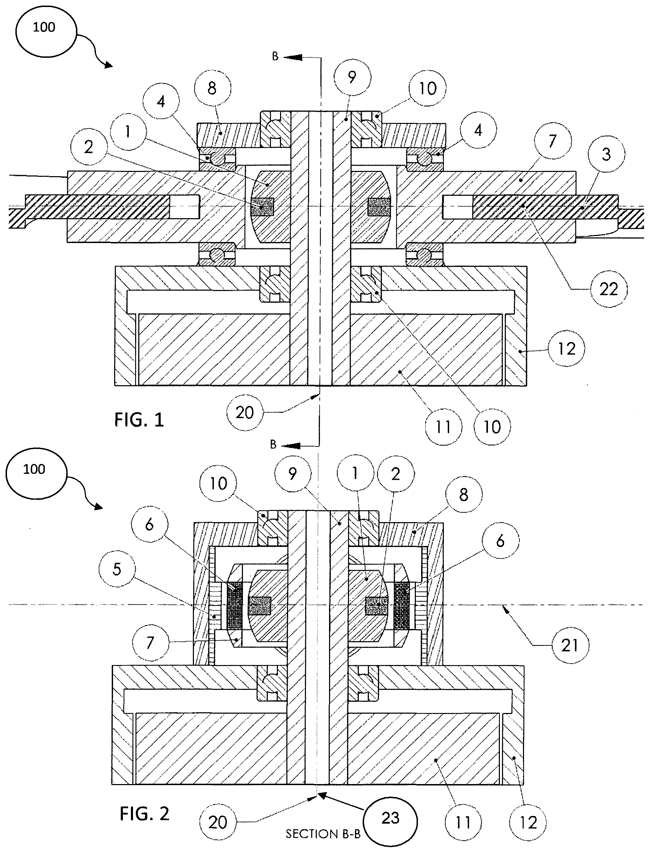

Le support pale (7) et les pales (3) sont en liaison pivot par rapport au rotor (8) par l'intermédiaire des roulements (4), sa rotation angulaire est limitée d'un angle + ou - alpha qui correspond à la variation de l'angle d'une pale par rapport à son pas neutre. Dans le cas d'une commande de pas cyclique avec deux pales solidaires (FIG 1,2,3,4), lorsqu'une pale augmente d'un angle alpha, son opposé est diminue du même angle, permettant ainsi des commandes de pas cyclique.

Le stator (1) est ferromagnétique, de forme sphérique, il est composé d'une bobine (2), selon le sens du courant, la partie supérieure sera en pole nord et la partie inférieure en pole sud dans un sens et inversement dans le sens opposé du courant.

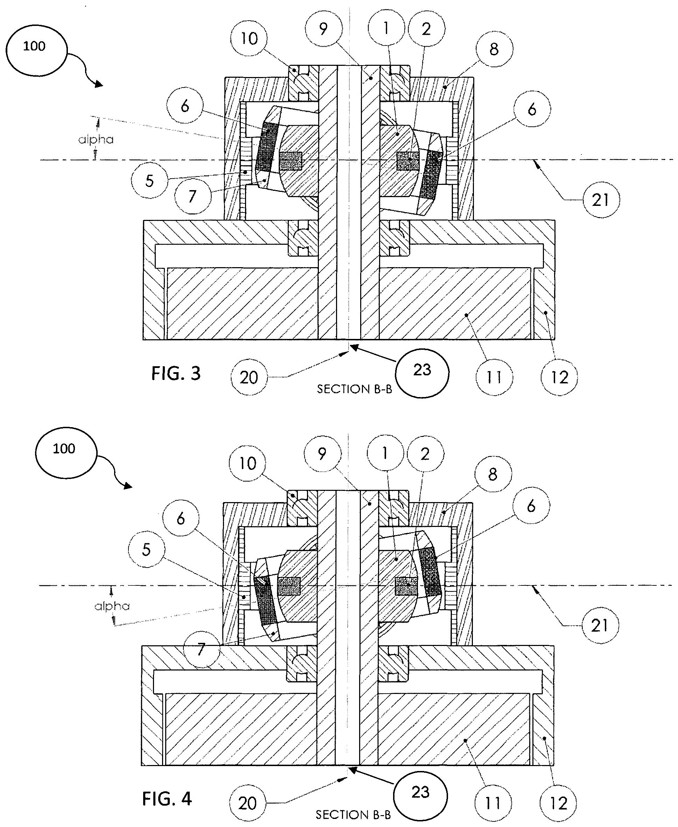

Selon les figures 1,2,3 et 4 le support pale (7) est composé de deux aimants (6) de pôles opposés, un pole nord et un pole sud, de sorte que lorsque le stator (1) est alimenté, un des aimants soit attiré par la partie supérieur du stator (1) et que l'autre aimant soit attiré par la partie inférieur du dit stator provoquant ainsi la rotation du support pale (7) et des pales (3) d'un angle + ou - alpha (FIG.3 et FIG.4).

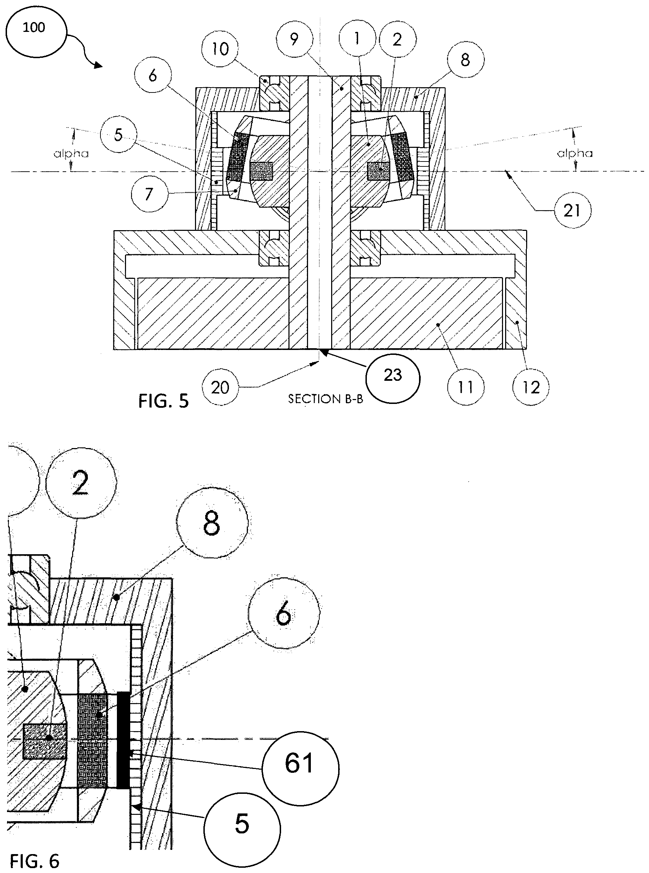

Dans la figure 5, les pôles sont similaires, de sorte que lorsque le stator (1) est alimenté, tous les aimants soit attirés par la partie supérieure ou inférieure du dit stator selon le sens du courant provoquant ainsi la rotation des supports pale (7) et des pales (3) d'un angle alpha (FIG.5) ayant pour effet des commandes de pas collectif.

La bague magnétique (5) est ferromagnétique, elle permet de boucler le flux magnétique des aimants (6) évitant ainsi les perturbations magnétiques.

La bague magnétique (5) assure également la position neutre du support pale (7), les aimants (6) étant attirés par la bague magnétique (5), la forme de la dite bague magnétique permet une "raideur magnétique" de la rotation du support pale (7) agissant comme un ressort.

La figure 6 montre la bague magnétique composée d'aimant rotor (61) afin de générer une attraction magnétique sur les aimants (6).

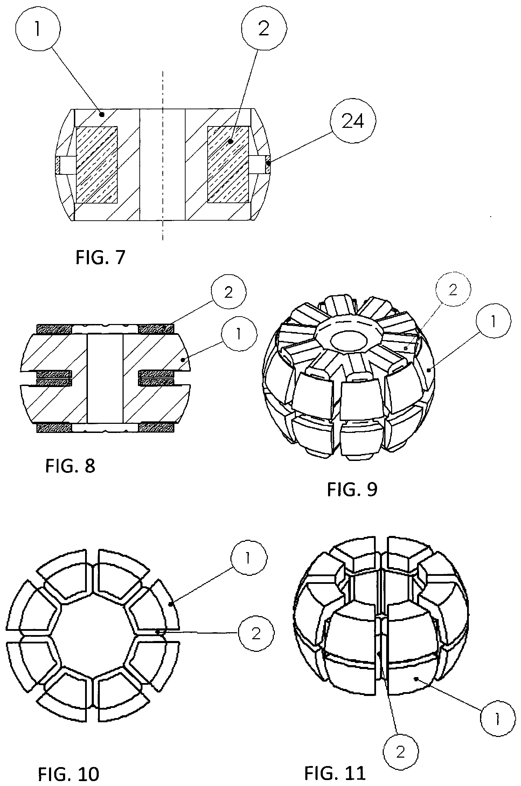

La figure 7 montre un stator bipolaire, optimisé pour générer un couple maximum, la bobine mesure (24) permet de mesurer, par la Force Electro Motrice, la vitesse angulaire des pales (3) autour de l'axe pale.

Les figures 8,9,10,11 montrent le stator avec plusieurs bobines distribuées sur la périphérie du dit stator (1), cela permet de commander plusieurs pales indépendamment, et éventuellement de générer un couple moteur autours de l'axe (9) en interaction avec les aimants (6) et avec les aimants rotor (61).

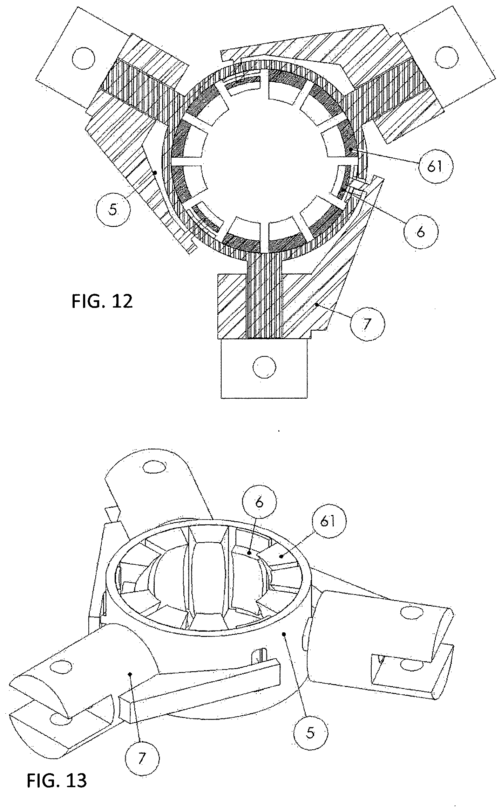

les figures 12, 13 montrent le dispositif sans stator, avec des aimants rotor (61) permettant un couple moteur autour de l'axe (9), les aimants (6) permettent la commande en angles des supports pale (7) .

Le dispositif selon l'invention est idéalement couplé à un moteur, le rotor (8) couple au rotor moteur (12) et l'axe (9) couplé au stator moteur (11).

Le dispositif suivant l'invention est particulièrement destiné au petit aéronef a décollage vertical, type hélicoptère ou aile fixe à décollage verticale. Le dispositif peut également être utilisé pour des vecteurs aérien multi rotors ou pour des rotors de queues d'hélicoptères.

## Revendications

1. Un dispositif (100) de commande directe de pales, particulièrement pour un aéronef, le dit dispositif rotatif (100) comprenant :
- un rotor (8) en rotation autour d'un axe rotor (20)
- au moins un support pale (7) composé d'au moins un aimant (6), le dit support pale (7) est en liaison essentiellement pivot avec le rotor (8) et en rotation autours d'un axe pale (22),
un plan pale (23) est définit passant par le dit axe rotor (20) et passant par le dit axe pale (22)
- au moins une pale (3) attachée au support pale (7)
- un stator (1) composé d'au moins une bobine (2), le centre du dit stator (1) est l'intersection de l'axe pale (22) et de l'axe rotor (20),
dispositif **caractérisé en ce que** ledit stator (1) est partiellement sphérique et **en ce que** la face interne du dit aimant (6) est courbe, ledit aimant est décalé de l'axe pale (22) perpendiculairement au plan pale (23) radialement proche du stator (1) pour permettre une interaction électromagnétique afin de contrôler l'angle des pales (3) autour de l'axe pale (22).

2. Dispositif (100) selon la revendication 1 **caractérisé en ce que** la face externe du dit aimant (6) est radialement proche d'une bague magnétique (5) solidaire du rotor (8), pour permettre un maintient magnétique en position angulaire neutre de la rotation des pales (3).

3. Dispositif (100) selon la revendication 2 **caractérisé en ce que** la bague magnétique (5) est composé d'au moins un aimant rotor (61) .

4. Dispositif (100) selon la revendication 1 **caractérisé en ce que** le dit aimant (3) est une pièce ferromagnétique saturée magnétiquement par au moins un aimant permanent.

5. Dispositif (100) selon la revendication 1 **caractérisé en ce que** la Force Electro Motrice des bobines (2) permettant l'excitation du stator est mesurée afin de déterminer la position des pales (3).

6. Dispositif (100) selon la revendication 1 **caractérisé en ce que** le stator (1) présente au moins une bobine mesure (24) coaxial à l'axe rotor (20) permettant une mesure de la Force Electromotrice afin de déterminer l'angle des pales (3).

7. Dispositif (100) selon la revendications 1 **caractérisé en ce que** au moins une bobine mesure (24) est situé sur la partie sphérique du stator (1) afin de déterminer par la Force Electro Motrice ou par induction la position des pales (3).

8. Dispositif (100) selon la revendications 7 **caractérisé en ce que** la ou les bobines mesure (24) sont des bobines de surface, en fil émaillé ou en circuit imprimé flexible.

9. Dispositif (100) selon la revendication 1 **caractérisé en ce que** le dit stator (1) est composée de plusieurs bobines (2) distribuées sur la périphérie du dit stator (1).

10. Dispositif (100) selon la revendication 9 **caractérisé en ce que** les bobines (2) du stator (1) sont commutées de manière à générer un couple autours de l'axe rotor (20) en interaction avec les aimants (6) et avec les aimants rotor (61).

11. Dispositif (100) selon la revendication 1 **caractérisé en ce qu'**un moteur est directement couplé au dispositif.

12. Aéronef à décollage verticale comportant au moins un dispositif (100) selon l'une quelconque des revendications 1 à 11.

13. Aéronef selon la revendication 12, **caractérisé en ce qu'**il comporte une voilure fixe.

## Patentansprüche

1. Eine Vorrichtung (100) zur direkten Steuerung eines Rotorblatt, insbesondere für ein Flugzeug, wobei die Drehvorrichtung (100) auf-weist:
- einen Rotor (8), der um eine Rotorachse (20)
- mindestens einen Blattträger (7), der mit mindestens einem Permanentmagneten (6) zusammengesetzt ist, wobei der Blattträger (7) mit einem Rotor (8) um eine Blattachse (22),
Eine Blattebene (23) durch die Rotorachse (20) und die Blattachse (22),
- mindestens ein an dem Blattträger (7) befestigtes Rotorblatt (3)
- einen Stator (1) aus mindestens einer Spule (2), wobei die Mitte des Stators (1) der Schnittpunkt die Blattachse (22) und der Rotorachse (20),
Vorrichtung, **dadurch gekennzeichnet, dass** der Stator (1) ein teilkugelförmiger Stator ist, dessen Innenseite gegenüber die Blattachse (22) senkrecht zur Blattebene (23) radial nahe am Stator (1) gekrümmt ist, um eine elektromagnetische Wechselwirkung zur Steuerung der Rotation der Rotorblatt (3) um die Blattachse (22) zu ermöglichen.

2. Vorrichtung (100) nach Anspruch 1, **dadurch gekennzeichnet, dass** die Außenseite des Magneten (6) radial nahe an einem mit dem Rotor (8) befestigten Magnetring (5) liegt, um das Rotorblatt (3) in einem Neutralleiter zu halten Position.

3. Vorrichtung (100) nach Anspruch 2, **dadurch gekennzeichnet, dass** der Magnetring (5) aus mindestens einem Rotormagneten (61) besteht.

4. Vorrichtung (100) nach Anspruch 1, **dadurch gekennzeichnet, dass** der Magnet (6) ein ferromagnetischer Teil ist, der durch mindestens einen Permanentmagneten magnetisch gesättigt ist.

5. Vorrichtung (100) nach Anspruch 1 **dadurch gekennzeichnet, dass** die elektromotorische Kraft (EMF) der Spulen (2) für die Stator Anregung gemessen wird, um die Position das Rotorblatt (3) zu bestimmen.

6. Vorrichtung (100) nach Anspruch 1, **dadurch gekennzeichnet, dass** der Stator (1) mindestens eine Messspule (24) koaxial zur Rotorachse (20) zur Messung der elektromotorischen Kraft zur Bestimmung des Winkels des Rotorblattes (3) aufweist.

7. Vorrichtung (100) nach Anspruch 1, **dadurch gekennzeichnet, dass** mindestens einer Messspule (24) auf dem kugelförmigen Teil des Stators angeordnet ist (1), um die Position das Rotorblatt (3) durch die elektromotorische Kraft oder durch Induktion zu bestimmen.

8. Vorrichtung (100) nach Anspruch 7, **dadurch gekennzeichnet, dass** die Messspulen (24) Oberflächenspulen, emaillierte Draht oder flexible Leiterbahnen sind.

9. Vorrichtung (100) nach Anspruch 1, **dadurch gekennzeichnet, dass** der Stator (1) aus mehreren am Umfang des Stators (1) verteilten Spulen (2) zusammengesetzt ist.

10. Vorrichtung (100) nach Anspruch 9, **dadurch gekennzeichnet, dass** die Spulen (2) des Stators (1) derart geschaltet sind, dass sie im Zusammenwirken mit den Magneten (6) und den Rotormagneten (61) ein Drehmoment um die Rotorachse (20) erzeugen.

11. Vorrichtung (100) nach Anspruch 1, **dadurch gekennzeichnet, dass** ein Motor direkt mit der Vorrichtung gekoppelt ist.

12. Ein Vertikal und Startflugzeug mit mindestens einer Vorrichtung (100) nach einem der Ansprüche 1 bis 11.

13. Flugzeug nach Anspruch 12, **dadurch gekennzeichnet, dass** es einen festen Flügel umfasst.

## Claims

1. A device (100) for directly control a blade, particularly for an aircraft, said rotary device (100) comprising:
- a rotor (8) rotating around a rotor axis (20)
- at least one blade carrier (7) composed with at least one permanent magnet (6), said blade carrier (7) pivotally coupled with a rotor (8) around a blade axis (22),
a blade plane (23) is defined by said rotor axis (20) and said blade axis (22),
- at least one blade (3) attached to the blade carrier (7)
- a stator (1) composed of at least one coil (2), the centre of said stator (1) being the intersection of the blade axis (22) and the rotor axis (20),
device **characterized in that** said stator (1) is a partially spherical stator, the internal face of said magnet (6) is curved, offset from the blade axis (22) perpendicular with the blade plane (23) radially close to the stator (1) to allow electromagnetic interaction to control the rotation of the blades (3) around the blade axis (22).

2. Device (100) according to claim 1 **characterized in that** the external face of said magnet (6) is radially close to a magnetic ring (5) secured with the rotor (8), to hold the blade (3) in a neutral position.

3. Device (100) according to claim 2 **characterized in that** said magnet ring (5) is composed of at least one rotor magnet (61).

4. Device (100) according to claim 1 **characterized in that** said magnet (6) is a ferromagnetic part magnetically saturated by at least one permanent magnet.

5. Device (100) according to claim 1 **characterized in that** the electromotive force (EMF) of the coils (2) for the stator excitation is measured in order to determine the position of the blades (3).

6. Device (100) according to claim 1 **characterized in that** the. stator (1) has at least one measuring coil (24) coaxial with the rotor axis (20) for measuring the electromotive force to determine the angle of the blades (3).

7. Device (100) according to claim 1 **characterized in that** at least one measuring coil (24) is located on the spherical portion of the stator (1) in order to determine by the electromotive force or by induction the position of the blades (3).

8. Device (100) according to claim 7 **characterized in that** the measuring coils (24) are surface coils, enamelled wire or flexible printed circuit.

9. Device (100) according to claim 1 **characterized in that** said stator (1) is composed of a plurality of coils (2) distributed on the periphery of said stator (1).

10. Device (100) according to claim 9 **characterized in that** the coils (2) of the stator (1) are switched so as to generate a torque around the rotor axis (20) in interaction with the magnets (6) and with the rotor magnets (61).

11. Device (100) according to claim 1 **characterized in that** a motor is directly coupled to the device.

12. A vertical and take-off aircraft having at least one device (100) according to any one of claims 1 to 11.

13. Aircraft according to claim 12, **characterized in that** it comprises a fixed wing.
